Europäisches Patentamt

European Patent Office

Office européen des brevets

(11) Veröffentlichungsnummer: **0 258 741 B1**

(12) **EUROPÄISCHE PATENTSCHRIFT**

(45) Veröffentlichungstag der Patentschrift: **22.01.92**

(21) Anmeldenummer: **87112063.0**

(22) Anmeldetag: **20.08.87**

(51) Int. Cl.⁵: **C08L  51/04**, C08L 25/12, C08F 279/02, C08F 285/00, C08L 55/02

(54) **Thermoplastische Formmasse auf Basis von ABS.**

(30) Priorität: **27.08.86 DE 3629150**

(43) Veröffentlichungstag der Anmeldung:
**09.03.88 Patentblatt  88/10**

(45) Bekanntmachung des Hinweises auf die
Patenterteilung:
**22.01.92 Patentblatt  92/04**

(84) Benannte Vertragsstaaten:
**BE DE FR GB NL**

(56) Entgegenhaltungen:
**EP-A- 0 099 532**
**EP-A- 0 104 899**
**EP-A- 0 219 090**

(73) Patentinhaber: **BASF Aktiengesellschaft
Carl-Bosch-Strasse 38
W-6700 Ludwigshafen(DE)**

(72) Erfinder: **Mitulla, Konrad, Dr.
Schwalbenweg 31
W-6700 Ludwigshafen(DE)**
Erfinder: **Seiler, Erhard, Dr.
Erpolzheimer Strasse 1
W-6700 Ludwigshafen(DE)**
Erfinder: **Schmitt, Burghard, Prof. Dr.
Braeunigstrasse 12
W-6520 Worms 24(DE)**
Erfinder: **Siebel, Hans Peter, Dr.
Trifelsring 20
W-6703 Limburgerhof(DE)**
Erfinder: **Jung, Rudolf H., Dr.
Wachenheimer Strasse 6d
W-6520 Worms 1(DE)**
Erfinder: **Scharf, Bernhard, Dr.
Branichstrasse 3
W-6905 Schriesheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine thermoplastische Formmasse aus mit kautschukartigen Polybutadien-Polymerisaten oder -Copolymerisaten schlagzähmodifizierten Styrol-Acrylnitril-Copolymerisaten.

Zum Stand der Technik nennen wir

(1) DE-OS 24 20 357
(2) DE-OS 24 20 358
(3) DE-OS 31 49 358
(4) EP-A 104 899

Die Herstellung von schlagzähmodifizierten Styrol-Acrylnitril-Copolymerisaten ist in (1) und (2) beschrieben. Dabei werden zwei verschiedene Kautschukdispersionen, eine grobteilige und eine feinteilige, unterschiedlich gepfropft. Nachteil dieses Verfahrens ist die schwierige technische Durchführung. In (3) werden ASA-Polymerisate beschrieben, die einen Pfropfkautschuk besitzen, dessen Hülle zweistufig aufgebaut ist. Oft genügt aber die Zähigkeit und hier besonders die Kältezähigkeit des Acrylatkautschuks den ständig steigenden Ansprüchen nicht. In (4) werden ABS-Polymerisate beschrieben, die einen Pfropfkautschuk besitzen, dessen Hülle ebenfalls zweistufig aufgebaut ist. Die Produkte besitzen jedoch aufgrund des hohen Pfropfhüllenanteils eine ungenügende Fließfähigkeit und Kältezähigkeit (vgl. Vergleichsversuche).

Es bestand die Aufgabe, besonders in der Kälte, hochschlagzähe ABS-Formmassen zu schaffen, die neben der guten Zähigkeit befriedigend verarbeitbar sind und darüber hinaus auch eine gute Einfärbbarkeit besitzen.

Diese Aufgabe wird gelöst durch eine Formmasse, die enthält, jeweils bezogen auf die Summe der Bestandteile A und B,

A: 1 bis 70 Gew.-% eines Pfropfmischpolymerisates A aus einem Elastomeren (Kautschuk) $a_1$ als Pfropfgrundlege und einer auf das Elastomere gepfropften Hülle $a_2$, wobei das Elastomere $a_1$ ausschließlich Butadien oder - neben Butadien - bis zu 30 Gew.-%, bezogen auf $a_1$, Styrol oder Acrylnitril einpolymerisiert enthält, eine mittlere Teilchengröße im Bereich von 100 bis 750 nm ($d_{50}$-Wert der integralen Massenverteilung) aufweist und 90 - 50 Gew.-%, bezogen auf A, ausmacht und wobei die Hülle $a_2$ Styrol oder $\alpha$-Methylstyrol ($a_{22}$) und mindestens ein monoethylenisch ungesättigtes Monomer ($a_{23}$), ausgewählt aus Acrylnitril oder Methylmethacrylat, aufweist und 10 bis 50 Gew.-%, bezogen auf A, ausmacht;

B: 99 bis 30 Gew.-% eines Copolymerisates (Hartmatrix; B) aus Styrol oder $\alpha$-Methylstyrol ($b_1$) und mindestens einem monoethylenisch ungesättigten Monomeren ($b_2$), ausgewählt aus Acrylnitril und Methylmethacrylat.

Erfindungsgemäß wird die Pfropfhülle $a_2$ in 2 Verfahrensstufen erhalten, wobei man in Gegenwart des Elastomeren $a_1$ in an sich bekannter Weise
in einer ersten Verfahrensstufe 5 bis 50 Gew.-%, bezogen auf $a_2$, ausschließlich Styrol bzw. $\alpha$-Methylstyrol ($a_{22}$) und danach
in einer zweiten Verfahrensstufe 50 bis 95 Gew.-%, bezogen auf $a_2$, eine Mischung aus Styrol bzw. $\alpha$-Methylstyrol ($a_{22}$) und Acrylnitril oder Methylmethacrylat ($a_{23}$) im Gewichtsverhältnis 90:10 bis 66:34 aufpfropft (polymerisiert).

Nachstehend werden der Aufbau der Formmasse aus den Komponenten, die Herstellung der Komponenten und die der Formmasse beschrieben.

Die Formmasse enthält oder vorzugsweise besteht aus den nachstehend genannten Anteilen der Komponenten, bezogen auf A + B:

A: 1 - 70 Gew.-%, vorzugsweise 10 - 60 Gew.-%, insbesondere 30 - 50 Gew.-%
B: 99 - 30 Gew.-%, vorzugsweise 90 - 40 Gew.-%, insbesondere 70 - 50 Gew.-%

Zusätzlich kann die Formmasse, bezogen auf 100 Gew.-Teile A + B, 1 bis 30 Gew.-Teile, vorzugsweise 2 bis 25 Gew.-Teile, einer Komponente C (übliche Zusatzstoffe) aufweisen.

Komponente A

Das Pfropfmischpolymerisat A besteht aus einem Elastomeren (Kautschuk) $a_1$ als Pfropfgrundlage, das 90 - 50 Gew.-%, vorzugsweise 80 - 50 Gew.-% und insbesondere 70 - 55 Gew.-%, jeweils bezogen auf A, ausmacht, und einer auf das Elastomere gepfropften Hülle $a_2$ ($a_1$ + $a_2$ = A).

Das Elastomere $a_1$ besteht vorzugsweise ausschließlich aus Butadien oder enthält neben Butadien bis zu 30 Gew.-%, bezogen auf $a_1$, eines Comonomeren aus der Gruppe von Styrol oder Acrylnitril einpolymerisiert, bei einer mittleren Teilchengröße im Bereich von 100 bis 750nm ($d_{50}$-Wert der integralen Massenverteilung).

Die Hülle $a_2$ weist außer Styrol oder $\alpha$-Methylstyrol ($a_{22}$) mindestens ein monoethylenisch ungesättigtes Monomer ($a_{23}$) auf, nämlich Acrylnitril oder Methylmethacrylat.

Die Pfropfhülle $a_2$ wird in 2 Verfahrensstufen erhalten, wobei man in Gegenwart des Elastomeren $a_1$ in an sich bekannter Weise

in einer ersten Verfahrensstufe 5 bis 50 Gew.-%, vorzugsweise 8 bis 40 Gew.-% Styrol oder $\alpha$-Methylstyrol, bezogen auf die Gesamtmenge des Pfropfhülle $a_2$, und

in einer zweiten Verfahrensstufe 50 bis 95 Gew.-%, vorzugsweise 60 bis 92 Gew.-%, bezogen auf $a_2$, einer Mischung aus Styrol bzw. $\alpha$-Methylstyrol ($a_{22}$) und Acrylnitril oder Methylmethacrylat ($a_{23}$) im Gewichtsverhältnis 90 : 10 bis 66 : 34, insbesondere von 75 : 25 bis 66 : 34, aufgepfropft (polymerisiert).

Die Herstellung und der Aufbau der Pfropfmischpolymerisate A ist dem Fachmann bekannt, dies gilt auch für die Komponenten, deren bevorzugte Darstellung nachstehend erläutert wird.

Herstellung des Elastomeren $a_1$

Das Elastomer, die Pfropfgrundlage $a_1$, wird hergestellt, indem Butadien allein, gegebenenfalls zusammen mit den weiteren Comonomeren in wäßriger Emulsion in an sich bekannter Weise bei Temperaturen von 20 bis 100 °C, vorzugsweise von 50 bis 80 °C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage $a_1$ eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage $a_1$ eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphat dienen; ferner werden in der Regel 0,1 bis 3 Gew.-% eines Molekulargewichtsreglers - wie Mercaptane, Terpinole oder dimeres $\alpha$-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisats $a_1$ einen $d_{50}$-Wert im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

Herstellung der Pfropfhülle $a_2$

Die Pfropfhülle, Komponente $a_2$, ist 2-stufig aufgebaut und wird durch sukzessive Polymerisation der Monomeren $a_{22}$ und $a_{23}$ in 2 Verfahrensschritten in Gegenwart des Latex des Elastomeren $a_1$ erzeugt. Zu ihrer Herstellung wird zunächst in der ersten Verfahrensstufe Styrol oder $\alpha$-Methylstyrol ($a_{22}$) verwendet. Dem Fachmann ist bekannt, wie er dieses Ziel erreicht (Vorlage der Monomeren, Zugabe während der Polymerisation und dgl.).

Es ist vorteilhaft, die Pfropfmischpolymerisation des Monomeren $a_{22}$ auf das als Pfropfgrundlage dienende Elastomere $a_1$ in wäßriger Emulsion unter den üblichen, vorstehend aufgeführten Bedingungen durchzuführen. Die Pfropfmischpolymerisation kann zweckmäßig im gleichen System erfolgen wie die Emulsionspolymerisation zur Herstellung der Pfropfgrundlage $a_1$, wobei, falls notwendig, weiterer Emulgator und Initiator zugegeben werden kann. Das aufzupfropfende Monomere kann dem Reaktionsgemisch auf einmal, absatzweise in mehreren Stufen oder vorzugsweise kontinuierlich während der Polymerisation zugegeben werden. Die Pfropfmischpolymerisation in Gegenwart des Elastomeren wird so geführt, daß ein Pfropfgrad von 0,05 bis 22, vorzugsweise von 2,5 bis 20, bezogen auf die erste Verfahrensstufe, im Pfropfmischpolymerisat resultiert.

Unter Pfropfgrad (PG) versteht man das Verhältnis der Pfropfmonomeren zum Pfropfkautschuk in Gewichtsteilen multipliziert mit dem Faktor 100

3

$$PG = \frac{Pfropfmonomeren}{Pfropfkautschuk} \cdot 100 \quad,$$

wobei für die erste Pfropfstufe gilt:

$$\frac{a_{22}}{a_1 + a_{22}} \cdot 100$$

und für die zweite Pfropfstufe:

$$\frac{(a_{22Rest} + a_{23})}{a_1 + a_{22} + (a_{22Rest} + a_{23})} \cdot 100 .$$

In einer zweiten Stufe wird dann die Pfropfmischpolymerisation mit einem Monomerengemisch aus restlichem Styrol bzw. $\alpha$-Methylstyrol ($a_{22Rest}$) und Acrylnitril oder Methylmethacrylat ($a_{23}$) durchgeführt. Dabei werden bevorzugt die bereits bei der ersten Pfropfstufe eingesetzten Monomeren verwendet. Als besonders bevorzugte Monomerengemische werden vor allem Styrol und Acrylnitril, $\alpha$-Methylstyrol und Acrylnitril und Styrol, Acrylnitril und Methylmethacrylat eingesetzt.

Auch der zweite Schritt der Pfropfmischpolymerisation wird zweckmäßigerweise im gleichen System durchgeführt, dabei kann, falls notwendig, weiterer Emulgator und Initiator zugegeben werden. Das aufzupfropfende Monomeren-Gemisch, besonders bevorzugt wird eine Mischung aus Styrol und Acrylnitril, kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol/ $\alpha$-Methylstyrol und Acrylnitril/Methylmethacrylat in Gegenwart des Reaktionsproduktes aus der ersten Pfropfstufe wird so aufgeführt, daß ein Pfropfgrad von 10 bis 50 Gew.-%, vorzugsweise von 30 bis 40 Gew.-%, im Pfropfmischpolymerisat resultiert. Die Pfropfmischpolymerisate sollen mittlere. Teilchengrößen von 100 bis 750 nm ($d_{50}$-Wert) besitzen. Die Bedingungen der Pfropfmischpolymerisation sind so zu wählen, daß Teilchengrößen in diesem Bereich resultieren. Maßnahmen hierzu sind bekannt und z.B. in der DE-PS 12 60 135 und der DE-OS 28 26 925 sowie in Journal of Applied Polymer Science, Vol. 9 (1965), S. 2929 bis 2938 beschrieben.

Zusätzlich zu dem reinen Pfropfmischpolymerisat A enthält die Komponente A noch einen geringeren Anteil einer nicht-elastomeren Hartkomponente, die bei der Pfropfmischpolymerisation entsteht und aus freien, nicht gepfropften Copolymerisaten oder Homopolymerisaten der Pfropfmonomeren besteht. Diese Produkte werden im Sinne der vorliegenden Erfindung zur Komponente A gerechnet.

Komponente B

Zusätzlich zu dem Pfropfmischpolymerisat enthalten die erfindungsgemäßen Mischungen als weitere Komponente eine separat hergestellte Hartmatrix aus einem oder mehreren Copolymerisaten.

Die Komponente B ist wiederum aus Styrol oder $\alpha$-Methylstyrol einerseits und Acrylnitril oder Methylmethacrylat andererseits aufgebaut.

Der Acrylnitril-Gehalt in diesen Copolymerisaten der Hartmatrix soll 10 bis 40 Gew.-%, vorzugsweise 20 bis 36 Gew.-%, bezogen auf das jeweilige Copolymerisat der Hartkomponente, betragen.

Bei dieser zusätzlichen, separat hergestellten Hartmatrix B kann es sich im weiteren Sinne um ein Styrol/Acrylnitril-Copolymerisat, ein $\alpha$-Methylstyrol/Acrylnitril-Copolymerisat, ein Styrol/Methylmethacrylat-Copolymerisat, ein Styrol/Acrylnitril/Methylmethacrylat- oder ein $\alpha$-Methylstyrol/Styrol/ Acrylnitril-Terpolymerisat handeln. Diese Copolymerisate können einzeln oder auch in Mischung miteinander für die Hartmatrix eingesetzt werden, so daß es sich bei der zusätzlichen, separat hergestellten Hartkomponente der erfindungsgemäßen Mischungen beispielsweise um eine Mischung aus einem Styrol/Acrylnitril-Copolymeri-

EP 0 258 741 B1

sat und einem α-Methylstyrol/Acrylnitril-Copolymerisat handeln kann. In dem Fall, in dem die Hartmatrix der erfindungsgemäßen Massen aus einer Mischung von einem Styrol/Acrylnitril-Copolymerisat und einem α-Methylstyrol/Acrylnitril-Copolymerisat besteht, soll der Acrylnitrilgehalt der beiden Copolymerisate tunlichst nicht mehr als 10 Gew.-%, vorzugsweise nicht mehr als 5 Gew.-%, bezogen auf das Copolymerisat, voneinander abweichen.

Die zusätzliche, separat hergestellte Hartmatrix B kann nach den herkömmlichen Methoden erhalten werden. So kann die Copolymerisation des Styrols und/oder α-Methylstyrols mit dem Acrylnitril in Masse, Lösung, Suspension oder wäßriger Emulsion durchgeführt werden. Die Hartmatrix B hat vorzugsweise eine Viskositätszahl von 40 bis 100, insbesondere von 50 bis 80.

Die Abmischung der separat hergestellten Hartmatrix B mit dem bei der Pfropfmischpolymerisation zur Herstellung der Komponente A erhaltenen Produkt zu den erfindungsgemäßen Massen kann so vorgenommen werden, daß zuerst ein Teil der Hartmatrix B mit dem Pfropfmischpolymerisat A abgemischt und dann erst der Rest der Hartmatrix B hinzugegeben wird. Die Abmischung kann aber auch in einem Schritt erfolgen.

Bevorzugt wird zur Herstellung der thermoplastischen Formmasse eine Schmelze des harten Polymerisats B mit dem Pfropfmischpolymerisat A bei Temperaturen über 200 °C intensiv vermischt.

Das Abmischen der Komponenten A und B (und gegebenenfalls C) kann nach allen bekannten Methoden erfolgen. Wenn die Komponenten z.B. durch Emulsions-Polymerisation hergestellt worden sind, ist es z.B. möglich, die erhaltenen Polymerdispersionen miteinander zu vermischen, darauf die Polymerisate gemeinsam auszufällen und das Polymerisatgemisch aufzuarbeiten. Vorzugsweise geschieht jedoch das Abmischen der Komponenten A und B durch gemeinsames Extrudieren, Kneten oder Verwalzen der Komponenten, wobei die Komponente A notwendigenfalls zuvor aus der bei der Polymerisation erhaltenen Lösung oder wäßrigen Dispersion isoliert worden ist. Die in wäßriger Dispersion erhaltenen Produkte der Pfropfmischpolymerisation (Komponente A) können auch nur teilweise entwässert werden und als feuchte Krümel mit der Hartkomponente B vermischt werden, wobei dann während des Vermischens die vollständige Trocknung der Pfropfmischpolymerisate erfolgt. Man kann auch die Hartkomponentenschmelze B direkt mit einer Dispersion des Pfropfmischpolymerisats A, die einen Feststoffgehalt von 40-70 Gew.-% aufweist, bei Temperaturen über 180 °C intensiv vermischen.

Komponente C

Die erfindungsgemäßen Mischungen aus den Komponenten A und B können als weitere Komponente C Zusatzstoffe enthalten, wie sie für derartige Polymerisate üblich und gebräuchlich sind. Als solche seien beispielsweise genannt: Füllstoffe, weitere verträgliche Kunststoffe, Antistatika, Farbstoffe, Antioxidantien, Flammschutzmittel und Schmiermittel. Die Zusatzstoffe werden in üblichen Mengen, vorzugsweise in Mengen von 0,1 bis zu insgesamt etwa 30 Gewichtsteilen, bezogen auf 100 Gewichtsteile der Mischung (A + B), eingesetzt.

Die in der vorliegenden Anmeldung beschriebenen Parameter wurden wie folgt bestimmt:

1. Die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

2. Die Kerbschlagzähigkeit $a_k$ in [$kJ/m^2$] an den Proben der Produkte wurde nach DIN 53 453 an bei 250 °C gespritzten Normkleinstäben bei 23 °C und -40 °C gemessen. Die Schlagzähigkeit der Probenvergleichsversuche und der Beispiele sind in die Tabelle mit aufgenommen.

3. Der Plastechontest in [Nm] der Produkte wurde nach DIN 53 453 an bei 250 °C gespritzten Rundscheiben mit den Abmessungen, Durchmesser x Dicke, 60 mm x 2 mm bei 23 °C gemessen. Die Werte der Proben von Beispielen und von Vergleichsversuchen finden sich in der Tabelle.

4. Die Viskositätszahl der Hartmatrix B wurde nach DIN 53 726 von einer Lösung, die 0,5 g Polymerisat in 100 cm$^3$ Dimethylformamid enthielt, bei 25 °C bestimmt.

5. Der Schmelzindex MFI wird nach DIN 53 735 bei einer Temperatur von 200 °C und 21,6 kp Belastung ermittelt. (Die Einheit ist g/10 Min.)

Die Vorbereitung der Proben erfolgt gemäß der DIN 16 772.

Für die Herstellung erfindungsgemäßer Formmassen und von Formmassen für Vergleichsversuche wurden die nachfolgend beschriebenen Produkte verwendet:

Komponente $A_1$ bis $A_{10}$

Herstellung der Pfropfgrundlage $a_1$

Durch Polymerisation von 60 Teilen Butadien in Gegenwart von 0,5 Teilen t-Dodecylmercaptam, 0,7 Teilen Na-$C_{12}$-$C_{20}$-Fettsäuresalz als Emulgator, 0,2 Teilen Kaliumperoxidisulfat und 0,5 Teilen NaCl in 80 Teilen Wasser wird bei 65°C ein Polybutadienlatex erhalten, dessen mittlere Teilchengröße bei 0,1 $\mu$m liegt. Nach Beendigung der Polymerisation wird der Polymerisationsautoklav entspannt und dannach solange evakuiert bis der Restbutadiengehalt auf unter 100 ppmd (parts per million dispersion) absinkt. 50 Teile dieses Latices wurden mit 4 Teilen einer wäßrigen 10 gew.%igen Essigsäureanhydridlösung, wie in der US-PS 3 551 370 beschrieben, agglomeriert. Man erhält einen engverteilten Latex mit einer mittleren Teilchengrößenverteilung von 0,7 $\mu$m. Diese agglomerierte Dispersion wird mit 90 Teilen der unagglomerierten Dispersion und 0,5 Teilen Kalium-$C_{12}$-$C_{18}$-sulfonat vermischt und dient als Pfropfgrundlage $a_1$.

Herstellung der Pfropfgrundlage $a_2$

Durch Polymerisation von 60 Teilen Butadien in Gegenwart von 0,5 Teilen t-Dodecylmercaptam, 0,7 Teilen Na-$C_{12}$-$C_{20}$-Fettsäuresalz als Emulgator, 0,2 Teilen Kaliumperoxidisulfat und 0,2 Teilen Natriumbicarbonat in 80 Teilen Wasser wird bei 65°C ein Polybutadienlatex erhalten, dessen mittlere Teilchengröße bei 0,1 $\mu$m liegt. Nach Beendigung der Polymerisation wird der Polymerisationsautoklav entspannt und danach solange evakuiert bis der Restbutadiengehalt auf unter 100 ppmd (parts per million dispersion) absinkt. Dieser Latex wird durch Zusatz von 2 Teilen einer 10 gew.%igen Dispersion eines Copolymeren aus 98 Teilen Ethylacrylat und 2 Teilen Acrylsäureanhydrid agglomeriert, wobei ein Polybutadienlatex mit einer mittleren Teilchengröße von 0,4 $\mu$m erhalten wird.

Herstellung der Pfropfpolymerisate $A_1$ bis $A_{10}$

Die Pfropfpolymerisate werden nach der allgemeinen Rezeptur hergestellt: (Alle Angabewn in Gew.-Teilen)

| | | |
|---|---|---|
| Pfropfgrundlage (Festpolymerisat) | 60 - | Gew.Teile |
| Entsalztes Wasser | 50 - 70 | " |
| Emulgator (Kalium-$C_{12}$-$C_{18}$-sulfonat) | 0 - 2 | " |
| Pfropfmonomere $a_{22}$ | 3 - 25 | " |
| Pfropfmonomerengemisch $a_{22Rest}$ + $a_{23}$ | 5 - 50 | " |
| t-Dodecylmercaptam | 0,0 - 1,0 | " |
| Polymerisationstemperatur: | 65 - 75°C | |

Apparatur: Rührkessel (V2A) mit Kühler, Meßvorlagen, Füllgrad 75 %.

Polymerisationsverfahren: Batch- oder Zulaufansatz mit Emulgator oder Monomerzulauf

Im einzelnen wurden die in der Tabelle 1 genannten Mengen an Pfropfmonomeren in Gew.-Teilen (in der 1. Stufe nur Styrol als Monomeres $a_{22}$; in der 2. Stufe eine Mischung aus $a_{22Rest}$ = Styrol und Acrylnitril in den genannten Gewichtsverhältnissen) angewendet.

6

Tabelle 1

| Pfropfmischp. $A_n$ | Pfropfgrundlage | 1. Stufe Pfropfmonomere $a_{22}$ Styrol (Teile) | 2. Stufe Pfropfmonomere $a_{22}$Rest+$a_{23}$ Styrol/Acrylnitril (Teile) | Verhältnis Styrol : Acrylnitril |
|---|---|---|---|---|
| $A_1$ | $a_1$ | 13,2 | 26,8 | 70 : 30 |
| $A_2$ | $a_1$ | 8 | 32 | 70 : 30 |
| $A_3$ | $a_1$ | 4 | 36 | 70 : 30 |
| $A_4$ | $a_2$ | 16 | 24 | 72 : 28 |
| $A_5$ | $a_2$ | 10 | 30 | 72 : 28 |
| $A_6$ | $a_2$ | 10 | 20 | 70 : 30 |
| $A_7$ | $a_2$ | 15 | 35 | 72 : 28 |
| $A_8$ | $a_2$ | 10 | 30 | 60 : 40 n. erf. |
| $A_9$ | $a_1$ | – | 38 | 70 : 30 n. erf. |
| $A_{10}$ | $a_2$ | – | 35 | 70 : 30 n. erf. |

n. erf. = nicht erfindungsgemäß

Komponente B

$B_1$ Als Hartmatrix wurde ein in Massepolymerisation hergestelltes Styrol/Acrylnitrilcopolymerisat mit einer Viskositätszahl von 80 cm³/g eingesetzt, das 35 Gew.-% Acrylnitril enthielt und unter dem

7

Namen ®Luran 378 P im Handel erhältlich ist.

B$_2$     Als Hartmatrix wurde ein in Massepolymerisation hergestelltes Styrol/Acrylnitrilcopolymerisat mit einer Viskositätszahl von 60 cm$^3$/g eingesetzt, das 30 Gew.-% Acrylnitril enthielt.

B$_3$     Als Hartmatrix wurde ein in Emulsion hergestelltes Styrol/Acrylnitrilcopolymerisat eingesetzt, das eine Viskositätszahl von 70 xm$^3$/g besaß und 30 Gew.-% Acrylnitril enthielt.

Die Erfindung wird durch die nachfolgenden Beispiele näher erläutert. Die in den Beispielen genannten Teile und Prozente beziehen sich, sofern nicht anders angegeben, auf das Gewicht.

Tabelle 2

| Beispiele | Pfropfdispersion A Teile | Hartkomponente B Teile | $a_k$ 23°C | $a_k$ -40°C | Plastechontest 23°C | Schmelzindex MFI |
|---|---|---|---|---|---|---|
| 1 | 45 A$_1$ | 55 B$_1$ | 27 | 18 | 40 | 3 |
| 2 | 45 A$_2$ | 55 B$_1$ | 24 | 16 | 41 | 3 |
| 3 | 45 A$_3$ | 55 B$_2$ | 22 | 12 | 36 | 6 |
| 4 | 40 A$_4$ | 60 B$_2$ | 20 | 11 | 30 | 8 |
| 5 | 40 A$_6$ | 60 B$_1$ | 19 | 10 | 33 | 2,5 |
| 6 | 45 A$_5$ | 55 B$_2$ | 24 | 14 | 35 | 7 |
| 7 | 40 A$_7$ | 60 B$_2$ | 20 | 10 | 35 | 6 |
| 8 | 35 A$_5$ | 65 B$_2$ | 18 | 8 | 31 | 15 |
| 9 | 35 A$_5$ | 65 B$_3$ | 20 | 9 | 34 | 8 |
| **Vergleichsversuche** | | | | | | |
| I | 45 A$_9$ | 55 B$_1$ | 22 | 12 | 36 | 2,5 |
| II | 45 A$_{10}$ | 55 B$_2$ | 20 | 10 | 32 | 7 |
| III | 40 A$_8$ | 60 B$_1$ | 20 | 8 | 25 | 4 |

Beispiele 1 bis 5 und Vergleichsversuche I bis II

Die Pfropfdispersionen A$_1$ - A$_{10}$ wurden nach Zusatz von 1,0 Teilen (auf 100 Teile Festpolymerisat) eines phenolischen Antioxidants (2,6-Di-t-butyl-p-kresol) über eine 25%ige Öl-in-Wasser-Emulsion mit Magnesiumsulfat kopaguliert. Nach dem Waschen wird das resultierende Pulver bei 70°C im Vakuum-

9

schrank getrocknet. Das erhaltene Pulver wird anschließend in den in Tabelle 2 genannten Gewichtsverhältnissen mit den Komponenten $B_n$ im Doppelschneckenextruder bei 180° C vermischt.

**Patentansprüche**

1. Thermoplastische Formmasse, enthaltend, jeweils bezogen auf die

A: Summe aus A und B, 1 bis 70 Gew.-% eines Pfropfmischpolymerisates A, aufgebaut aus einem Elastomeren (Kautschuk) $a_1$ und einer auf das Elastomere gepfropften Hülle $a_2$, wobei das Elastomere $a_1$ ausschließlich Butadien oder - neben Butadien bis zu 30 Gew.-%, bezogen auf $a_1$, Styrol oder Acrylnitril einpolymerisiert enthält, eine mittlere Teilchengröße im Bereich von 100 bis 750 nm ($d_{50}$-Wert der integralen Massenvertielung) aufweist und 90 - 50 Gew.-%, bezogen auf A, ausmacht und wobei die Hülle $a_2$ Styrol oder $\alpha$-Methylstyrol ($a_{22}$) und mindestens ein monethylenisch ungesättigtes Monomer ($a_{23}$), ausgewählt aus Acrylnitril und Methylmethacrylat, aufweist und 10 bis 50 Gew.-% bezogen auf A ausmacht;
B: 99 bis 30 Gew.-%, eines Copolymerisates (Hartmatrix; B) aus Styrol oder $\alpha$-Methylstyrol ($b_1$) und mindestens einem monethylenisch ungesättigen Monomeren ($b_2$) ausgewählt aus Acrylnitril und Methylmethacrylat,

dadurch gekennzeichnet, daß die Pfropfhülle $a_2$ erhalten wird in 2 Verfahrensstufen, wobei man in Gegenwart des Elastomeren $a_1$ in an sich bekannter Weise

in einer ersten Verfahrensstufe 5 bis 50 Gew.-%, bezogen auf $a_2$, ausschließlich Styrol bzw. $\alpha$-Methylstyrol ($a_{22}$) und danach in einer zweiten Verfahrensstufe 50 bis 95 Gew.-%, bezogen auf $a_2$, einer Mischung aus Styrol bzw. $\alpha$-Methylstyrol ($a_{22}$) und Acrylnitril oder Methylmethacrylat ($a_{23}$) im Gewichtsverhältnis 90 : 10 bis 66 : 34 aufgepfropft (polymerisiert).

2. Thermoplastische Formmasse nach Anspruch 1, enthaltend bezogen auf A + B,

10 bis 60 Gew.-% A

und

90 bis 40 Gew.-% B, wobei

in der ersten Verfahrensstufe 5 bis 50 Gew.-%, bezogen auf $a_2$, des Monomeren $a_{22}$ und

in der zweiten Verfahrensstufe 50 bis 95 Gew.-%, bezogen auf $a_2$, der Mischung aus $a_{22}$ und dem Monomeren $a_{23}$ im Gewichtsverhältnis 90 : 10 bis 66 : 34 aufgepfropft werden.

3. Thermoplastische Formmasse nach Anspruch 1, enthaltend, bezogen auf A + B,

30 bis 50 Gew.-% A,

und

70 bis 50 Gew.-% B, wobei

in der ersten Verfahrensstufe 8 bis 40 Gew.-% bezogen auf $a_2$, des Monomeren $a_{22}$ und

in der zweiten Verfahrensstufe 60 bis 92 Gew.-%, bezogen auf $a_2$, der Mischung aus $a_{22}$ und dem Monomeren $a_{23}$ im Gewichtsverhältnis 90 : 10 bis 66 : 34 aufgepfropft werden.

4. Thermoplastische Formmasse nach Anspruch 3, dadurch gekennzeichnet, daß die Pfropfhülle $a_2$ erhalten wird indem man in der zweiten Verfahrensstufe die Mischung aus Styrol $a_{22}$ und Acrylnitril $a_{23}$ im Gewichtsverhältnis 2,58 bis 2,33, aufpfropft.

5. Thermoplastische Formmasse nach Anspruch 1, dadurch gekennzeichnet, daß sie, bezogen auf 100 Gew.-Teile A + B, zusätzlich 1 bis 30 Gew.-Teile einer Komponente C aufweist.

6. Verwendung der Formmasse nach Anspruch 1 oder 5 zur Herstellung von Formteilen.

**Claims**

1. Thermoplastic molding material containing, based on the sum of A and B,
   A: from 1 to 70% by weight of a graft copolymer A composed of an elastomer (rubber) a, and a shell $a_2$ grafted onto the elastomer, the elastomer $a_1$ containing exclusively butadiene or, in addition to butadiene, not more than 30% by weight, based on $a_1$, of styrene or acrylonitrile as polymerized units, having a median particle size of from 100 to 750 nm ($d_{50}$ value of the integral mass distribution) and accounting for 90 - 50% by weight, based on A, and the shell $a_2$ containing styrene or α-methylstyrene ($a_{22}$) and one or more monoethylenically unsaturated monomers ($a_{23}$) selected from acrylonitrile and methylmethacrylate and accounting for from 10 to 50% by weight, based on A, and
   B: from 99 to 30% by weight of a copolymer (hard matrix; B) of styrene or α-methylstyrene ($b_1$) and one or more monoethylenically unsaturated monomers ($b_2$) selected from acrylonitrile and methylmethacrylate,
   wherein the graft shell $a_2$ is obtained in 2 process stages where, in the presence of the elastomer $a_1$, in a conventional manner, from 5 to 50% by weight, based on $a_2$, of exclusively styrene or α-methylstyrene ($a_{22}$) are grafted (polymerized) in a first process stage and then from 50 to 95% by weight, based on $a_2$, of a mixture of styrene or α-methylstyrene ($a_{22}$) and acrylonitrile or methylmethacrylate ($a_{23}$) in a weight ratio of from 90 : 10 to 66 : 34 are grafted (polymerized) in a second process stage.

2. Thermoplastic molding material as claimed in claim 1, containing, based on A + B,
   from 10 to 60% by weight of A
   and
   from 90 to 40% by weight of B,
   from 5 to 50% by weight, based on $a_2$, of the monomer $a_{22}$ being grafted in the first process stage and from 50 to 95% by weight, based on $a_2$, of the mixture of $a_{22}$ and the monomer $a_{23}$ in a weight ratio of from 90 : 10 to 66 : 34 being grafted in the second process stage.

3. A thermoplastic molding material as claimed in claim 1, containing, based on A + B,
   from 30 to 50% by weight of A
   and
   from 70 to 50% by weight of B,
   from 8 to 40% by weight, based on $a_2$, of the monomer $a_{22}$ being grafted in the first process stage and from 60 to 92% by weight, based on $a_2$, of the mixture of $a_{22}$ and the monomer $a_{23}$ in a weight ratio of from 90 : 10 to 66 : 34 being grafted in the second process stage.

4. A thermoplastic molding material as claimed in claim 3, wherein the graft shell $a_2$ is obtained by grafting the mixture of styrene $a_{22}$ and acrylonitrile $a_{23}$ in a weight ratio of from 2.58 to 2.33 in the second process stage.

5. A thermoplastic molding material as claimed in claim 1, which additionally contains from 1 to 30 parts by weight, based on 100 parts by weight of A + B, of a component C.

6. Use of a molding material as claimed in claim 1 or 5 for the production of moldings.

**Revendications**

1. Masses à mouler thermoplastiques, contenant, à chaque fois par rapport à la somme de A + B,
   A : 1 à 70% en poids d'un copolymère greffé A construit à partir d'un élastomère (caoutchouc) $a_1$ et d'une enveloppe $a_2$ greffée sur l'élastomère, l'élastomère $a_1$ contenant en chaîne polymère exclusivement du butadiène, ou en plus du butadiène jusqu'à 30% en poids par rapport à $a_1$, du styrène ou de l'acrylonitrile, présentant une grosseur moyenne de particules comprise entre 100 et 750 nm (valeur $d_{50}$ de la distribution de masse intégrale) et

11

représentant de 90 à 50% en poids par rapport à A, et l'enveloppe $a_2$ contenant du styrène ou de l'$\alpha$-méthylstyrénique ($a_{22}$) et au moins un monomère à insaturation monoéthylénique ($a_{23}$) choisi entre l'acrylonitrile et le méthacrylate de méthyle et représentant de 10 à 50% en poids par rapport à A;

B : 99 à 30% en poids d'un copolymère (matrice dure; B) de styrène ou d'$\alpha$-méthylstyrène ($b_1$) et d'au moins un monomère ($b_2$) à insaturation monoéthylénique choisi entre l'acrylonitrile et le méthacrylate de méthyle, caractérisées en ce que l'enveloppe greffée $a_2$ est obtenue en deux étapes de procédé, c'est à dire que l'on greffe (polymérise) d'une façon connue en soi en présence de l'élastomère $a_1$

dans une première étape du procédé, de 5 à 50% en poids, par rapport à $a_2$, uniquement de styrène ou d'$\alpha$-méthylstyrène ($a_{22}$), puis dans une deuxième étape du procédé, de 50 à 95% en poids, par rapport à $a_2$, d'un mélange de styrène ou d'$\alpha$-méthylstyrène ($a_{22}$) et d'acrylonitrile ou de méthacrylate de méthyle ($a_{23}$) dans un rapport pondéral de 90:10 à 66:34.

2. Masses à mouler thermoplastiques selon la revendication 1, contenant par rapport à A + B

10 à 60 % en poids de A

et

90 à 40 % en poids de B,

avec greffage, dans la première étape de procédé, de 5 à 50% en poids par rapport à $a_2$ du monomère $a_{22}$ et, dans la deuxième étape de procédé, de 50 à 95% en poids par rapport à $a_2$ du mélange de $a_{22}$ et du monomère $a_{23}$ dans un rapport pondéral de 50:10 à 66:34.

3. Masses à mouler thermoplastiques selon la revendication 1, contenant par rapport à A + B :

30 à 50 % en poids de A,

et

70 à 50% en poids de B,

avec greffage, dans la première étape de procédé, de 8 à 40% en poids par rapport à $a_2$ du monomère $a_{22}$ et, dans la deuxième étape de procédé, de 60 à 92% en poids par rapport à $a_2$ du mélange de $a_{22}$ et du monomère $a_{23}$ dans un rapport pondéral de 90:10 à 66:34.

4. Masses à mouler thermoplastiques selon la revendication 3, caractérisées en ce que l'enveloppe greffée $a_2$ est obtenue par greffage, dans la deuxième étape de procédé, du mélange de styrène $a_{22}$ et d'acrylonitrile $a_{23}$ dans un rapport pondéral de 2,58 à 2,33.

5. Masses à mouler thermoplastiques selon la revendication 1, caractérisées en ce qu'elles contiennent, en plus, de 1 à 30 parties en poids, pour 100 parties en poids de A + B, d'un composé C.

6. Utilisation des masses à mouler selon les revendications 1 ou 5 pour la préparation d'articles moulés.